# EUROPÄISCHE PATENTSCHRIFT

(11) **EP 0 869 991 B1**
(45) Veröffentlichungstag und Bekanntmachung des Hinweises auf die Patenterteilung: **23.06.1999**
(21) Anmeldenummer: 96944601.2
(22) Anmeldetag: 19.12.1996
(51) Int. Cl.: C08L 31/02

(54) **REDISPERGIERBARE DISPERSIONSPULVER-ZUSAMMENSETZUNG**
REDISPERSIBLE, DISPERSION-POWDER COMPOSITION
COMPOSITION REDISPERSIBLE DE DISPERSION PULVERULENTE

(30) Priorität: 29.12.1995 DE 19549084
(43) Veröffentlichungstag der Anmeldung: 14.10.1998
(73) Patentinhaber: Wacker-Chemie GmbH, 81737 München (DE)
(72) Erfinder: WEITZEL, Hans-Peter, D-84571 Reischach (DE); BALL, Peter, D-84547 Emmerting (DE); FIGGE, Reiner, D-84539 Ampfing (DE)
(74) Vertreter: Schuderer, Michael, Dr.
(86) Internationale Anmeldenummer: EP9605722
(87) Internationale Veröffentlichungsnummer: WO9724400

(56) Entgegenhaltungen:
- DE-A- 2 614 261
- JP-B- 48 007 493

## Beschreibung

Die vorliegende Erfindung betrifft pulverförmige, redispergierbare Bindemittel, die durch Sprühtrocknung einer ein wasserlösliches Polymerisat enthaltenden Dispersion erhalten werden, sowie deren Verwendung in Anwendungen in der Bauindustrie, speziell für die Modifizierung von zementären Massen, die Formulierung von Anstrichmassen und Verlaufsmassen.

Pulverförmige Bindemittel besitzen gegenüber den entsprechenden wäßrigen Formulierungen eine Reihe von Vorteilen: Sie erfordern geringere Transport- und Lagerkapazität, und sie sind weniger empfindlich gegen Einwirkung von Witterung, Frost und Mikroorganismen. Zur Herstellung solcher pulverförmiger Bindemittel werden bei der Sprühtrocknung sogenannte Sprühhilfsmittel eingesetzt, die ein Verbacken bzw. Verklumpen während des Trocknungsprozesses und bei nachfolgender Lagerung verhindern, und ein leichtes Redispergieren bei der Anwendung gewährleisten.

Die nach Stand der Technik bekannten Sprühhilfsmittel besitzen vielfältige Nachteile: Werden die aus der EP-A-78449 und der EP-A-407889 bekannten Naphthalinsulfonsäure- oder Phenolsulfonsäure-Formaldehyd-Kondensationsprodukte eingesetzt, erhält man gefärbte Produkte. Die aus der DE-A-4118007 und der EP-A-467103 bekannten Sprühhilfsmittel verschlechtern die Produkteigenschaften der damit versprühten Polymerisate als Bindemittel in der Anwendung. In der EP-A-671435 sind wasserlösliche Schutzkolloide, welche olefinisch ungesättigte Sulfonsäuren oder Carbonsäuren enthalten, als Verdüsungshilfen für Acrylatdispersionen beschrieben.

Aufgabe der Erfindung war es, pulverförmige, redispergierbare Bindemittel auf der Basis von Vinylester-Ethylen-Copolymerisaten zur Verfügung zu stellen, welche nicht die anwendungstechnischen Nachteile bei Verwendung der bekannten Sprühhilfsmittel aufweisen.

Gegenstand der Erfindung sind in Wasser redispergierbare Dispersionspulver-Zusammensetzungen enthaltend
a) ein Vinylester-Ethylen-Copolymerisat mit 50 bis 90 Gew% Vinylestern von C₂- bis C₁₂-Carbonsäuren, 1 bis 30 Gew% Ethylen, 0 bis 20 Gew% Vinylester von α-verzweigten Monocarbonsäuren mit 5 bis 10 C-Atomen, jeweils bezogen auf das Gesamtgewicht des Vinylester-EthylenCopolymerisats, und
b) 0.1 bis 30 Gew%, bezogen auf den Anteil an Vinylester-Ethylen-Copolymerisat, eines wasserlöslichen Copolymerisats mit 20 bis 80 Gew% hydrophoben, im wesentlichen wasserunlöslichen Monomeren, 20 bis 80 Gew% wasserlösliche, salzbildende Monomere aus der Gruppe der ethylenisch ungesättigten Sulfonsäuren sowie 0 bis 50 Gew% ethylenisch ungesättigte Mono- oder Dicarbonsäuren oder deren Anhydride, jeweils bezogen auf das Gesamtgewicht des wasserlöslichen Copolymerisats.

Bevorzugte Vinylester von C₂- bis C₁₂-Carbonsäuren sind Vinylacetat, Vinylpropionat, Vinylbutyrat, Vinyl-2-ethylhexanoat, Vinyllaurat, 1-Methylvinylacetat, Vinylpivalat; besonders bevorzugt ist Vinylacetat.

Bevorzugte Vinylester von α-verzweigten Monocarbonsäuren mit 5 bis 10 C-Atomen sind solche mit 5 oder 9 bis 10 C-Atomen, beispielsweise VV5^{R}, VeoVa9^{R} oder VeoVa10^{R}.

Gegebenenfalls können die Vinylester-Ethylen-Copolymerisate noch weitere monoethylenisch ungesättigte Verbindungen wie Olefine, z.B. Propylen, vinylaromatische Monomere wie Styrol, Ester von vorzugsweise 3 bis 6 C-Atome aufweisenden α,β-ungesättigten Mono- oder Dicarbonsäuren, wie Acrylsäure, Methacrylsäure, Maleinsäure, Fumarsäure mit 1 bis 12 C-Atomen aufweisenden Alkoholen, enthalten.

Gegebenenfalls enthalten die genannten Polymerisate noch 0.05 bis 5 Gew%, jeweils bezogen auf das Gesamtgewicht des Polymerisats, ein oder mehrere Hilfsmonomereinheiten zur Verbesserung der Wasserlöslichkeit, zur Vernetzung oder zur Modifikation der Haftungseigenschaften.

Geeignete Hilfsmonomere zur Verbesserung der Wasserlöslichkeit sind beispielsweise α,β-monoethylenisch ungesättigte Mono- und Dicarbonsäuren und deren Amide oder Nitrile, wie Acrylsäure, Methacrylsäure, Maleinsäure, Fumarsäure, Itaconsäure, Acrylamid, Methacrylamid; ethylenisch ungesättigte Sulfonsäuren bzw. deren Salze, vorzugsweise Vinylsulfonsäure, 2-Acrylamido-propansulfonat und/oder N-Vinylpyrrolidon.

Vernetzend wirkende Monomereinheiten sind vorzugsweise zu 0.5 bis 5.0 Gew%, bezogen auf das Gesamtgewicht des Polymerisats, im Polymerisat enthalten. Beispiele hierfür sind N-Methylolacrylamid, N-Methylolmethacrylamid; N-(Alkoxymethyl)acrylamide oder N-(Alkoxymethyl)methacrylamide mit einem C₁- bis C₆-Alkylrest, wie N-(Isobutoxymethyl)-acrylamid (IBMA), N-(Isobutoxymethyl)-methacrylamid (IBMMA), N-(n-Butoxymethyl)-acrylamid (NBMA), N-(n-Butoxymethyl)-methacrylamid (NBMMA); mehrfach ethylenisch ungesättigten Comonomere wie Ethylenglycoldiacrylat, 1,3-Butylenglycoldiacrylat, 1,4-Butylenglycoldiacrylat, Propylenglycoldiacrylat, Divinyladipat, Divinylbenzol, Vinylmethacrylat, Vinylacrylat, Allylmethacrylat, Allylacrylat, Diallylmaleat, Diallylphthalat, Diallylfumarat, Methylenbisacrylamid, Cyclopentadienylacrylat oder Triallylcyanurat.

Zur Modifikation der Haftungseigenschaften geeignete Comonomereinheiten sind beispielsweise Methacrylsäure- und Acrylsäurehydroxyalkylester wie Hydroxyethyl-, Hydroxypropyl- oder Hydroxybutyl-acrylat oder -methacrylat sowie Verbindungen wie Diacetonacrylamid und Acetylacetoxyethylacrylat oder -methacrylat.

Beispiele für geeignete Vinylester-Polymerisate sind:
Vinylester-Ethylen-Copolymere wie Vinylacetat-Ethylen-Copolymere mit einem Ethylengehalt von 1 bis 30 Gew%;
Vinylester-Ethylen-Vinylchlorid-Copolymerisate wie Vinylacetat-Ethylen-Vinylchlorid-Copolymere mit einem Ethylengehalt von 1 bis 30 Gew% und einem Vinylchlorid-Gehalt von 20 bis 49 Gew%;
Vinylacetat-Copolymere mit 1 bis 50 Gew% eines oder mehrerer copolymerisierbarer Vinylester wie Vinyllaurat, Vinylpivalat, Vinyl-2-ethylhexansäureester, Vinylester einer α-verzweigten Carbonsäure, insbesonders Versaticsäure-Vinylester (VeoVa9^{R}, VeoVa10^{R}), welche gegebenenfalls noch 1 bis 30 Gew% Ethylen enthalten;
Vinylester-Acrylsäureester-Copolymerisate mit 65 bis 90 Gew% Vinylester, insbesonders Vinylacetat, und 1 bis 30 Gew% Acrylsäureester, insbesonders n-Butylacrylat oder 2-Ethylhexylacrylat, welche gegebenenfalls noch 1 bis 30 Gew% Ethylen enthalten;
Vinylester-Acrylsäureester-Copolymerisate mit 35 bis 75 Gew% Vinylacetat, 1 bis 30 Gew% Vinyllaurat oder Vinylester einer α-verzweigten Carbonsäure, insbesonders Versaticsäure-Vinylester, wobei der Gesamtgehalt an Vinylester größer 60 Gew% ist, 1 bis 30 Gew% Acrylsäureester, insbesonders n-Butylacrylat oder 2-Ethylhexylacrylat, welche gegebenenfalls noch 1 bis 30 Gew% Ethylen enthalten;
Vinylester-Ethylen Copolymerisate mit Estern der Maleinsäure oder Fumarsäure wie Diisopropyl-, Di-n-butyl, Di-t-butyl-, Di-ethylhexyl-, Methyl-t-butyl-Ester, beispielsweise Vinylacetat-Copolymerisate mit 10 bis 35 Gew% eines oder mehrerer der genannten Malein-/Fumarsäure-Ester, welche gegebenenfalls noch Ethylen oder weitere copolymerisierbare Vinylester wie Vinyllaurat oder Versaticsäure-Vinylester enthalten.

Die Angaben in Gew% addieren sich dabei jeweils auf 100 Gew%. Die Zusammensetzung wird vorzugsweise so gewählt, daß die nach Fox ermittelte Glastemperatur Tg zwischen -30 und +30°C liegt.

Die Herstellung der genannten, radikalisch polymerisierbaren, wasserunlöslichen Polymere erfolgt vorzugsweise nach dem Emulsionspolymerisationsverfahren in einem Temperaturbereich von 0 bis 100°C und wird mit den für die Emulsionspolymerisation üblicherweise eingesetzten wasserlöslichen Radikalbildnern eingeleitet. Dies sind die bekannten organischen und anorganischen Peroxide wie Alkalimetallperoxodisulfate, Wasserstoffperoxid, tert.-Butylhydroperoxid oder organische Azoverbindungen. Vorzugsweise werden diese bekannten Verbindungen in Kombination mit Reduktionsmitteln wie das Natriumsalz der Hydroxymethansulfinsäure, Ascorbinsäure oder Natriumsulfit bzw. Natriumbisulfit eingesetzt. Zusätzlich können Metallverbindungen eingesetzt werden, in denen das Metall in verschiedenen Wertigkeiten vorliegen kann, wie Eisen(II)sulfat.

Als Dispergiermittel können alle üblicherweise bei der Emulsionspolymerisation verwendeten Emulgatoren eingesetzt werden. Zur Stabilisierung der Dispersion können sowohl Schutzkolloide als auch Emulgatoren oder Kombinationen aus beiden verwendet werden. Als Schutzkolloide eignen sich beispielsweise Cellulosen wie Hydroxyethylcellulose, Hydroxypropylcellulose und Carboxymethylcellulose, Stärken und Dextrine, Cyclodextrine, Polyvinylalkohole, Polyethylenglykol, Polyvinylpyrrolidon, Homo- und Copolymere von Acrylamidopropansulfonsäure. Die Schutzkolloide werden vorzugsweise in einer Menge von 0.1 bis 30 Gew%, bezogen auf die Gesamtmenge der Monomere, eingesetzt. Gegebenenfalls kann auch auf den Einsatz von Schutzkolloiden verzichtet werden.

Als Emulgatoren kommen alle handelsüblichen ionischen und nichtionischen Emulgatoren in Frage. Insbesondere können dies sein: Blockcopolymere von Ethylenoxid und Propylenoxid, ethoxylierte Alkylphenole, ethoxylierte Fettalkohole, sowie Alkali-und Ammoniumsalze von langkettigen Alkylsulfaten (C₈- bis C₁₂-Alkylrest), von Schwefelsäurehalbestern ethoxylierter Alkanole und ethoxylierter Alkylphenole, von Alkylsulfonsäuren und von Alkylarylsulfonsäuren.

Vorzugsweise wird bei einer Temperatur zwischen 30 und 100°C und bei einem Druck unter 100 bar polymerisiert. Die Polymerisation wird bei einem pH von vorzugsweise 2 bis 7 durchgeführt. Vor der Trocknung wird die Dispersion vorzugsweise auf einen Festgehalt von 20 bis 65 % eingestellt.

Die wasserlöslichen Polymer sind aufgebaut aus hydrophoben, im wesentlichen wasserunlöslichen Monomeren und hydrophilen, wasserlöslichen salzbildenden Monomeren. Als hydrophile, wasserlösliche Monomere können alle olefinisch ungesättigten Sulfon-, Carbon- und Phosphonsäuren und deren Salze eingesetzt werden. Bevorzugt werden Styrolsulfonsäure, Vinylsulfonat und ein- und mehrwertige α,β-ungesättigte Carbonsäuren, sowie deren Salze eingesetzt. Besonders bevorzugt werden Styrolsulfonsäure und/oder Vinylsulfonsäure sowie deren Salze in Kombination mit ein- und mehrwertigen α,β-ungesättigte Carbonsäuren, sowie deren Salze eingesetzt. Insbesonders werden Styrolsulfonat und/oder Vinylsulfonat in Kombination mit Acrylsäure, Methacrylsäure und/ oder Maleinsäure(anhydrid).

Als hydrophobe Monomere eignen sich beispielsweise Vinylester wie die bei Komponente a) beispielhaft genannten; Ester der Acrylsäure und Methacrylsäure wie Methyl(meth)acrylat, Butyl(meth)acrylat; Vinylaromaten wie Styrol oder Vinyltoluol, Olefine oder Diene wie Ethylen, Butadien. Bevorzugt werden die genannten Ester der Acrylsäure bzw. Methacrylsäure oder Styrol oder ein Gemisch dieser Monomere eingesetzt.

Die wasserlöslichen Polymere werden in bekannter Weise durch radikalische Lösungspolymerisation erzeugt. Bevorzugt wird in Wasser als Lösungsmittel bzw. Dispergiermittel polymerisiert. Als Inititiatoren kommen alle Verbindungen in Frage, die in der Lage sind in der wässrigen Phase eine radikalische Polymerisation auszulösen. Bevorzugt werden wasserlösliche Peroxide eingesetzt. Zur Regelung des Molekulargewichtes können in üblicher Weise Verbindungen wie Mercaptopropionsäure, Mercaptoessigsäure oder Sulfide eingesetzt werden. Das Molekulargewicht wird üblicherweise nicht direkt gemessen, sondern in einer dem Fachmann bekannten Weise durch den K-Wert, einer relativen Viskositätszahl, wiedergegeben. Bevorzugte K-Werte der wasserlöslichen Polymere sind 20 bis 60.

Sowohl das Vinylester/Ethylen-Copolymerisat a) als auch das wasserlösliche Polymer b) können nach Batch-, Semibatch- oder kontinuierlichen Verfahren hergestellt werden. Bevorzugt wird das semikontinuierliche Zulaufverfahren aller Kompnonenten verwendet.

Zur Herstellung der erfindungsgemäßen redispergierbaren Dispersionspulver-Zusammensetzung werden die Vinylester-Ethylen-Copolymerdispersion und das wasserlösliche Polymer in einem Verhältnis gemischt, daß die resultierende Dispersion einen Anteil von 1 bis 30 Gew% wasserlösliches Polymer, bezogen auf das Copolymer a), enthält. Die redispergierbare Dispersionspulver-Zusammensetzung wird durch Sprühtrocknung dieser Mischung in einem dem Stand Technik geläufigen Sprühtrocknungsturm erhalten. Die Eintrittstemperatur im Eingang des Turms beträgt hierbei 80 bis 150°C, vorzugsweise 100 bis 130°C. Die Austrittstemperatur liegt bei 40 bis 100°C, bevorzugt bei 50 bis 80°C. Zur Sprühtrocknung können Einstoff- oder Mehrstoffdüsen oder Zerstäuberscheiben verwendet werden. Als Trocknungsgas dient Luft oder Stickstoff.

Zur Vermeidung von Verbackungen des Pulvers können in an sich bekannter Weise Sprühhilfsstoffe wie hochdisperse Kieselsäure oder andere mineralische Hilfsstoffe eingesetzt werden.

Die erhaltenen Pulver finden Anwendung in folgenden Gebieten: Anstrich- und Beschichtungsmassen, Modifizierung von hydraulisch abbindenden Massen wie Beton, Mörtel.

### Beispiel 1:

### (Herstellung des wasserlöslichen Polymers)

In einem 2l-Polymerisationsgefäß wurden 330 g Wasser vorgelegt und auf 70°C erhitzt. Anschließend wurden innerhalb 3 h folgende Dosierungen zudosiert:
Dosierung 1: 75 g Natriumstyrolsulfonat in 600 g Wasser.
Dosierung 2: 50 g Methacrylsäure.
Dosierung 3: 75 g Ethylacrylat.
Dosierung 4: 2 g Kaliumperoxodisulfat in 70 g Wasser.
Danach wurde noch 2 h nachpolymerisiert. Man erhielt eine Lösung mit einem Festgehalt von 20.1 %.

### Beispiel 2:

### (Herstellung der Dispersionspulver-Zusammensetzung)

10000 g einer handelsübliche 50 %-igen Vinylacetat/Ethylen-Copolymerdispersion mit einem Ethylengehalt von 12 Gew%, schutzkolloidstabilisiert mit Polyvinylalkohol wurde mit 5000 g der wäßrigen Lösung aus Beispiel 1 versetzt, homogen vermischt und durch Zugabe von Wasser auf einen Feststoffgehalt von 30 % eingestellt. Diese Mischung wurde in einem üblichen Sprühtrockner mit Zweistoffdüse und einer Eintrittstemperatur von 120°C sprühgetrocknet. Als Trocknungsgas diente Luft. Um ein Verkleben des Pulvers zu verhindern wurde über eine zweite Düse eine Mischung aus Talkum und Dolomit so zugeführt, daß im Endprodukt 10 Gew.% Mineralanteil gefunden wurden. Das erhaltene Pulver war rieselfähig, blockfest und konnte leicht in Wasser zu einer stabilen Dispersion eingerührt werden.

## Patentansprüche

1. In Wasser redispergierbare Dispersionspulver-Zusammensetzungen enthaltend
a) ein Vinylester-Ethylen-Copolymerisat mit 50 bis 90 Gew% Vinylestern von C₂- bis C₁₂-Carbonsäuren, 1 bis 30 Gew% Ethylen, 0 bis 20 Gew% Vinylester von α-verzweigten Monocarbonsäuren mit 5 bis 10 C-Atomen, jeweils bezogen auf das Gesamtgewicht des Vinylester-Ethylen-Copolymerisats, und
b) 0.1 bis 30 Gew%, bezogen auf den Anteil an Vinylester-Ethylen-Copolymerisat, eines wasserlöslichen Copolymerisats mit 20 bis 80 Gew% hydrophoben, im wesentlichen wasserunlöslichen Monomeren, 20 bis 80 Gew% wasserlösliche, salzbildende Monomere aus der Gruppe der ethylenisch ungesättigten Sulfonsäuren sowie 0 bis 50 Gew% ethylenisch ungesättigte Mono- oder Dicarbonsäuren oder deren Anhydride, jeweils bezogen auf das Gesamtgewicht des wasserlöslichen Copolymerisats.

2. Dispersionspulver-Zusammensetzung nach Anspruch 1, dadurch gekennzeichnet, daß in Polymer b) als wasserlösliche Monomere Styrolsulfonsäure und/oder Vinylsulfonsäure sowie deren Salze in Kombination mit ein- und mehrwertigen α,β-ungesättigte Carbonsäuren, sowie deren Salze enthalten sind.

3. Dispersionspulver-Zusammensetzung nach Anspruch 1 oder 2, dadurch gekennzeichnet, daß in Polymer b) als hydrophobe Monomere Ester der Acrylsäure oder Methacrylsäure oder Styrol oder ein Gemisch dieser Monomere enthalten sind.

## Claims

1. Dispersion powder composition which is redispersible in water and comprises
a) a vinyl ester-ethylene copolymer comprising from 50 to 90% by weight of vinyl esters of C₂-C₁₂-carboxylic acids, from 1 to 30% by weight of ethylene and from 0 to 20% by weight of vinyl esters of α-branched monocarboxylic acids having from 5 to 10 carbon atoms, in each case based on the total weight of the vinyl ester-ethylene copolymer, and
b) 0.1 to 30% by weight, based on the amount of vinyl ester-ethylene copolymer present, of a water-soluble copolymer comprising from 20 to 80% by weight of hydrophobic, essentially water-insoluble monomers, from 20 to 80% by weight of water-soluble, salt-forming monomers selected from the group consisting of ethylenically unsaturated sulphonic acids and from 0 to 50% by weight of ethylenically unsaturated monocarboxylic or dicarboxylic acids or their anhydrides, in each case based on the total weight of the water-soluble copolymer.

2. Dispersion powder composition according to Claim 1, characterized in that the water-soluble monomers present in polymer b) are styrenesulphonic acid and/or vinylsulphonic acid or their salts in combination with monobasic and polybasic α,β-unsaturated carboxylic acids or their salts.

3. Dispersion powder composition according to Claim 1 or 2, characterized in that the hydrophobic monomers present in polymer b) are esters of acrylic acid or methacrylic acid or styrene or a mixture of these monomers.

## Revendications

1. Compositions de dispersions pulvérulentes redispersables dans l'eau, contenant
a) un copolymère ester vinylique-éthylène comprenant de 5 à 90% en poids d'esters vinyliques d'acides C₂-C₁₂-carboxyliques, de 1 à 30% en poids d'éthylène, de 0 à 20% en poids d'esters vinyliques d'acides monocarboxyliques ramifiés en α ayant de 5 à 10 atomes de carbone, dans chaque cas par rapport au poids total du copolymère ester vinylique-éthylène, et
b) de 0,1 à 30% en poids, par rapport à la proportion de copolymère ester vinylique-éthylène, d'un copolymère hydrosoluble comprenant de 20 à 80% en poids de monomères hydrophobes, essentiellement insolubles dans l'eau, de 20 à 80% en poids de monomères hydrosolubles, générateurs de sels parmi le groupe constitué des acides sulfoniques éthyléniquement insaturés, ainsi que de 0 à 50% en poids d'acide mono- ou dicarboxylique éthyléniquement insaturé ou de leurs anhydrides, dans chaque cas par rapport au poids total du copolymère hydrosoluble.

2. Composition de dispersion pulvérulente selon la revendication 1, caractérisée en ce que les monomères hydrosolubles contenus dans le polymère b) sont l'acide styrène-sulfonique et/ou l'acide vinylsulfonique ainsi que leurs sels en combinaison avec des acides carboxyliques α,β-insaturés monobasiques et polybasiques ainsi que leurs sels.

3. Composition de dispersion pulvérulente selon la revendication 1 ou 2, caractérisée en ce que les monomères hydrophobes contenus dans le polymère b) sont des esters de l'acide acrylique ou de l'acide méthacrylique, ou le styrène, ou un mélange de ces monomères.
